# EUROPEAN PATENT APPLICATION

(11) **EP 4 664 305 A1**
(43) Date of publication of application: **17.12.2025**
(21) Application number: 24759616.6
(22) Date of filing: 18.02.2024
(51) Int. Cl.: G06F 15/173, G06F 13/42

(54) **COMPUTING SYSTEM AND DATA TRANSMISSION METHOD**

(30) Priority: 20.02.2023 CN 202310158173
(71) Applicant: Huawei Technologies Co., Ltd., Shenzhen, Guangdong 518129 (CN)
(72) Inventor: CHEN, Rujie, Shenzhen, Guangdong 518129 (CN); ZHENG, Fei, Shenzhen, Guangdong 518129 (CN)
(74) Representative: Pfenning, Meinig & Partner mbB
(86) International application number: PCT/CN2024/077401
(87) International publication number: WO 2024/174939

(57) **Abstract**

This application relates to the field of computer technologies, and specifically, to a computing system and a data transmission method. The system includes a first subsystem and a second subsystem. When there is to-be-transmitted data between the first subsystem and the second subsystem, a processor of the first subsystem is configured to obtain a first address in the storage device of the first subsystem and a second address in a storage device of the second subsystem. The processor of the first subsystem is configured to associate N segment addresses in the second address with N transmission channels, where different segment addresses are different addresses in the second address, correspond to different addresses in the first address, and are associated with different transmission channels. When the second address is a source address, the processor of the first subsystem is configured to: read data at the segment address through a transmission channel associated with the segment address, and store the read data at an address that is in the first address and that corresponds to the segment address. The system can reduce data transmission delay and power consumption.

## Description

This application claims priority to Chinese Patent Application No. 202310158173.5, filed with the China National Intellectual Property Administration on February 20, 2023 and entitled "COMPUTING SYSTEM AND DATA TRANSMISSION METHOD", which is incorporated herein by reference in its entirety.

### TECHNICAL FIELD

This application relates to the field of computer technologies, and specifically, to a computing system and a data transmission method.

### BACKGROUND

To meet high computing capability requirements of an application (application, APP) such as artificial intelligence (artificial intelligence, AI) or three-dimension (3-dimension, 3D) model rendering, a plurality of chips are disposed in a computing device to collaboratively process a task of the application. The plurality of computing systems form a computing system to collaboratively process the task of the APP.

When the plurality of chips collaboratively process the task of the APP, different chips may need to exchange a large amount of data, that is, a large amount of data may need to be transmitted between the chips. Currently, a data transmission capability between different chips is limited. Consequently, data cannot be transmitted in time, and execution of a task of an APP is delayed.

### SUMMARY

Embodiments of this application provide a computing system and a data transmission method, to reduce a data transmission delay and power consumption.

According to a first aspect, a computing system is provided, where the system includes a first subsystem and a second subsystem, there are N transmission channels between the first subsystem and the second subsystem, N is an integer greater than 1, and each subsystem includes a processor and a storage device. When there is to-be-transmitted data between the first subsystem and the second subsystem, the processor of the first subsystem is configured to obtain a first address in the storage device of the first subsystem and a second address in a storage device of the second subsystem, where the first address is one of a source address or a destination address of the to-be-transmitted data, and the second address is the other of the source address or the destination address; the processor of the first subsystem is configured to associate N segment addresses in the second address with N transmission channels, where different segment addresses are different addresses in the second address, correspond to different addresses in the first address, and are associated with different transmission channels; and when the second address is the source address, the processor of the first subsystem is configured to: read data at the segment address through a transmission channel associated with the segment address, and store the read data at an address that is in the first address and that corresponds to the segment address.

The first subsystem and the second subsystem may be or include different chips. The first subsystem and the second subsystem may collaboratively process tasks of an application. When collaboratively processing the tasks of the application, the first subsystem and the second subsystem may need to exchange data. For example, the first subsystem may process a first task of the application, and the second subsystem may process a second task of the application. Execution of the second task requires an execution result of the first task, that is, the first subsystem needs to send the execution result of the first task to the second subsystem, which means that there is to-be-transmitted data between the first subsystem and the second subsystem.

A data amount of to-be-transmitted data is usually relatively large, and a single transmission channel cannot meet a data transmission requirement. Therefore, a plurality of transmission channels are required to transmit the data. When data transmission is performed in an existing multi-channel transmission manner, a source end of the data divides the to-be-transmitted data, packs the to-be-transmitted data into a plurality of data packets, and then transmits different data packets through different transmission channels. After receiving the data packet, a destination end of the data performs packet assembly based on a sequence of the data. Data segmentation and packet assembly increase a data transmission delay and power consumption. In addition, data packets transmitted through different transmission channels may arrive at a destination end at different time. When packet assembly is performed based on a sequence of data, a late arrival data packet needs to be waited for. This further increases the data transmission delay.

In the computing system provided in this embodiment of this application, when the first subsystem needs to obtain data from the second subsystem, the first subsystem may obtain an address of to-be-transmitted data in the second subsystem, and associate the N segment addresses at the address with the N transmission channels between the first subsystem and the second subsystem. Then, the first subsystem may read the data from the segment address through a transmission channel associated with each of the N segment addresses, and store the read data at the address that is in the second subsystem and that corresponds to the segment address, so that data transmission is completed in a manner of concurrent transmission through a plurality of transmission channels, thereby improving data transmission efficiency. In particular, the first subsystem reads data from the segment address of the second subsystem, and the second subsystem does not need to divide the data and pack the data into packets. The read data is stored at an address corresponding to the segment address, and the first subsystem does not need to perform packet assembly or wait for late arrival data. Therefore, the data transmission delay and power consumption are reduced.

In a possible implementation, when the second address is the destination address, the processor of the first subsystem is configured to write data into the segment address through the transmission channel associated with the segment address, where the written data is data at an address that is in the first address and that corresponds to the segment address.

In this implementation, when the first subsystem needs to send data to the second subsystem, the first subsystem may obtain an address that is in the second subsystem and that is used to store the to-be-transmitted data, and associate N segment addresses in the address with N transmission channels between the first subsystem and the second subsystem. Then, the first subsystem may write, through a transmission channel associated with each of the N segment addresses, data corresponding to the segment address into the segment address, so that data transmission is completed in a manner of concurrent transmission through a plurality of transmission channels, thereby improving data transmission efficiency. In particular, the first subsystem writes data at an address corresponding to a segment address into the segment address, and the first subsystem does not need to divide the data and pack the data into packets, and the second subsystem does not need to perform packet assembly and wait for late arrival data. Therefore, the data transmission delay and power consumption are reduced.

In a possible implementation, when the second address is the source address, the processor of the first subsystem is configured to send, to the second subsystem through the transmission channel associated with the segment address, a first read instruction whose destination address is the segment address, to read data at the segment address.

In this implementation, when the first subsystem needs to obtain data from the second subsystem, the processor of the first subsystem may send, through the transmission channel associated with the segment address, a read instruction whose destination address is the segment address. By using the read instruction, the data at the segment address is read without using an operating system of the second subsystem, so that the first subsystem directly reads the data from a storage device of the second subsystem, thereby reducing the data transmission delay and power consumption.

In a possible implementation, the first subsystem includes a bus and a port of a transmission channel, and the port of the transmission channel and the processor of the first subsystem are connected to the bus. The processor of the first subsystem is configured to send, through the bus, a second read instruction whose destination address is a port address of a transmission channel associated with the segment address, so that the second read instruction can be sent to the port of the transmission channel associated with the segment address. The port of the transmission channel associated with the segment address is configured to translate the port address in the second read instruction into the segment address, to obtain the first read instruction. The port of the transmission channel associated with the segment address is configured to send the first read instruction to the second subsystem.

In this implementation, the first subsystem first sets the destination address of the read instruction to the port address of the transmission channel associated with the segment address, and when the read instruction is sent through the bus, the read instruction may be routed to the port of the transmission channel. The port of the transmission channel translates the destination address of the read instruction from the port address of the transmission channel into the segment address, and sends the read instruction to the second subsystem through the transmission channel, so that the read instruction is routed to the storage device of the second subsystem in the second subsystem. The storage device of the second subsystem may execute the read instruction, read the data at the segment address, and return the read data to the second subsystem, to complete data transmission.

In a possible implementation, the processor of the first subsystem is configured to divide the second address into the N segment addresses based on transmission capabilities of the N transmission channels, where a length of the segment address is positively correlated with a transmission capability of the transmission channel associated with the segment address.

In this implementation, the length of the segment address may be determined based on the transmission capability of each of the N transmission channels, so that a segment address associated with a transmission channel with a stronger transmission capability is longer, and a segment address associated with a transmission channel with a weaker transmission capability is shorter. Therefore, more data is transmitted through a transmission channel with a stronger transmission capability, and less data is transmitted through a transmission channel with a weaker transmission capability, thereby avoiding a waste of the transmission capability and improving the data transmission efficiency.

In a possible implementation, the transmission capability includes an available bandwidth and/or quality of service QoS.

In a possible implementation, the first subsystem includes a first transmission engine and a second transmission engine, and when a load of the first transmission engine is less than a load of the second transmission engine, the processor of the first subsystem is configured to read the data at the segment address by using the first transmission engine through the transmission channel associated with the segment address. The storage device of the second subsystem may be a memory, and the transmission engine has a direct memory access capability. The processor of the first subsystem may directly access content of the second subsystem by using the transmission engine, to implement data transmission.

In this implementation, the processor of the first subsystem reads data from the storage device of the second subsystem by using a transmission engine with a relatively low load, thereby improving the data transmission efficiency.

In a possible implementation, the first subsystem includes k transmission engines, where k is an integer greater than 1; the processor of the first subsystem is configured to divide the second address into k segment addresses, where the k segment addresses are in a one-to-one correspondence with the k transmission engines; and when there is an intersection between the first segment address in the k segment addresses and the second segment address in the N segment addresses, the processor of the first subsystem is configured to read data in the intersection by using the transmission engine corresponding to the first segment address through the transmission channel associated with the second segment address. The storage device of the second subsystem may be a memory, and the transmission engine has a direct memory access capability. The processor of the first subsystem may directly access the memory of the second subsystem by using the transmission engine, to implement data transmission.

In this implementation, the address may be divided into segment addresses corresponding to the transmission engines based on a quantity of the transmission engines, where one transmission engine corresponds to one segment address. The transmission engine transmits, through the transmission channel, data in the intersection of the segment address corresponding to the transmission engine and the segment address corresponding to the transmission channel, thereby implementing concurrent transmission of the data by using a plurality of transmission engines through a plurality of transmission channels, thereby fully utilizing the transmission capabilities of the transmission channels and the transmission engines, and improving the data transmission efficiency.

In a possible implementation, the processor of the first subsystem is any one of a central processing unit CPU, a graphics processing unit GPU, a neural network processing unit NPU, or a field programmable gate array FPGA, and the processor of the second subsystem is any one of a CPU, a GPU, an NPU, or an FPGA.

According to a second aspect, a data transmission method is provided, where the method is applied to a first subsystem in a computing system, the computing system further includes a second subsystem, there are N transmission channels between the first subsystem and the second subsystem, N is an integer greater than 1, and each subsystem includes a processor and a storage device; and the method includes: When there is to-be-transmitted data between the first subsystem and the second subsystem, the processor of the first subsystem obtains a first address in the storage device of the first subsystem and a second address in the storage device of the second subsystem, where the first address is one of a source address or a destination address of the to-be-transmitted data, and the second address is the other of the source address or the destination address; the processor of the first subsystem associates N segment addresses in the second address with N transmission channels, where different segment addresses are different addresses in the second address, correspond to different addresses in the first address, and are associated with different transmission channels; and when the second address is the source address, the processor of the first subsystem reads data at the segment address through a transmission channel associated with the segment address, and stores the read data at an address that is in the first address and that corresponds to the segment address.

In a possible implementation, the method further includes: When the second address is the destination address, the processor of the first subsystem is configured to write data into the segment address through the transmission channel associated with the segment address, where the written data is data at an address that is in the first address and that corresponds to the segment address.

In a possible implementation, that the processor of the first subsystem reads the data at the segment address through the transmission channel associated with the segment address includes: The processor of the first subsystem sends, to the second subsystem through the transmission channel associated with the segment address, a first read instruction whose destination address is the segment address, to read data at the segment address.

In a possible implementation, that the processor of the first subsystem associates the N segment addresses in the second address with the N transmission channels includes: The processor of the first subsystem divides the second address into the N segment addresses based on transmission capabilities of the N transmission channels, where a length of the segment address is positively correlated with a transmission capability of the transmission channel associated with the segment address.

In a possible implementation, the first subsystem includes a first transmission engine and a second transmission engine, and that the processor of the first subsystem reads the data at the segment address through the transmission channel associated with the segment address includes: When a load of the first transmission engine is less than a load of the second transmission engine, the processor of the first subsystem reads the data at the segment address by using the first transmission engine through the transmission channel associated with the segment address.

In a possible implementation, the first subsystem includes k transmission engines, where k is an integer greater than 1; and the method further includes: The processor of the first subsystem divides the second address into k segment addresses, where the k segment addresses are in a one-to-one correspondence with the k transmission engines; and that the processor of the first subsystem reads the data at the segment address through the transmission channel associated with the segment address includes: When there is an intersection between the first segment address in the k segment addresses and the second segment address in the N segment addresses, the processor of the first subsystem reads data in the intersection by using the transmission engine corresponding to the first segment address through the transmission channel associated with the second segment address.

According to a third aspect, a data transmission apparatus is provided, where the apparatus is configured in a first subsystem in a computing system, the computing system further includes a second subsystem, there are N transmission channels between the first subsystem and the second subsystem, N is an integer greater than 1, and each subsystem includes a processor and a storage device. The apparatus includes: an obtaining unit, configured to: when there is to-be-transmitted data between the first subsystem and the second subsystem, obtain a first address in the storage device of the first subsystem and a second address in the storage device of the second subsystem, where the first address is one of a source address or a destination address of the to-be-transmitted data, and the second address is the other of the source address or the destination address; an association unit, configured to associate N segment addresses in the second address with N transmission channels, where different segment addresses are different addresses in the second address, correspond to different addresses in the first address, and are associated with different transmission channels; and an access unit, configured to: when the second address is the source address, read data at the segment address through a transmission channel associated with the segment address, and store the read data at an address that is in the first address and that corresponds to the segment address.

According to a fourth aspect, a chip is provided, including a processor and a storage device that are configured to perform the method according to the second aspect.

According to a fifth aspect, a computer storage medium is provided, including a computer software instruction, where the computer software instruction includes a program used to implement the method according to the second aspect.

According to a sixth aspect, a computer program product is provided, including a program used to implement the method according to the second aspect.

For beneficial effects of the second aspect to the sixth aspect, refer to the foregoing descriptions of beneficial effects of the first aspect. Details are not described herein again.

### BRIEF DESCRIPTION OF DRAWINGS

FIG. 1 is a diagram of connections between a plurality of chips;
FIG. 2 is a diagram of a structure of a computing system according to an embodiment of this application;
FIG. 3 is a flowchart of a data transmission solution according to an embodiment of this application;
FIG. 4A is a diagram of a structure of a computing system according to an embodiment of this application;
FIG. 4B is a diagram of a structure of a computing system according to an embodiment of this application;
FIG. 4C is a diagram of a structure of a computing system according to an embodiment of this application;
FIG. 4D is a diagram of a structure of a computing system according to an embodiment of this application;
FIG. 4E is a diagram of a structure of a computing system according to an embodiment of this application;
FIG. 4F is a diagram of a structure of a computing system according to an embodiment of this application;
FIG. 5 is a diagram of a structure of a computing system according to an embodiment of this application;
FIG. 6 is a flowchart of a data transmission method according to an embodiment of this application;
FIG. 7 is a diagram of a structure of a data transmission apparatus according to an embodiment of this application; and
FIG. 8 is a diagram of a structure of a chip according to an embodiment of this application.

### DESCRIPTION OF EMBODIMENTS

The following describes technical solutions of embodiments in this application with reference to accompanying drawings. It is clear that the described embodiments are merely some but not all of embodiments of this application.

In the descriptions of this specification, "an embodiment", "some embodiments", or the like indicates that one or more embodiments of this specification include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of" means two or more than two.

In the descriptions of this specification, the terms "first" and "second" are merely intended for description, and shall not be understood as an indication or implication of relative importance or an implicit indication of a quantity of indicated technical features. Therefore, a feature limited by "first" or "second" may explicitly or implicitly include one or more features. The terms "include", "have", and their variants all mean "include but are not limited to", unless otherwise specifically emphasized in another manner.

Development and application of artificial intelligence technologies and 3D model rendering technologies pose higher requirements on computing capabilities of computers. To improve the computing capabilities, a plurality of chips are usually disposed to collaboratively process tasks. The plurality of chips are homogeneous, that is, the plurality of chips may use a same architecture. For example, the plurality of chips are all central processing units (central processing unit, CPU) or graphics processing units (graphical processing unit, GPU). Alternatively, the plurality of chips may be heterogeneous, that is, the plurality of chips include chips with different architectures. For example, two chips in the plurality of chips may be any two of a CPU, a GPU, a network processing unit (neural processing unit, NPU), and a field programmable gate array (field programmable gate array, FPGA).

The CPU may be referred to as a general-purpose chip. Chips designed to execute specific operational logic, such as the GPU, the NPU, and the FPGA, may be collectively referred to as dedicated chips. Compared with a general-purpose chip, the dedicated chip is more suitable for performing a specific operation. For example, the NPU is suitable for performing a matrix vector data operation, and the GPU is suitable for performing a graphics data operation.

One of the plurality of chips may be used as a subsystem of a computing system of a computer for processing a task assigned by an application on the computer. An application may allocate a task to a plurality of chips for processing, or allocate different tasks to different chips. Execution of a chip task may depend on task processing results of other chips. For example, in a 3D game scenario, a game application may hand over a 3D model rendering task to a GPU for execution. After completing rendering, the GPU may send a rendering result to the CPU, so that the CPU may display a game picture based on the rendering result, scenario data, and the like. For another example, in a scenario in which an AI model is used to infer an auto-driving policy, an auto-driving application may load the AI model to an NPU, and the NPU performs inference by using the AI model. After obtaining an inference result, the NPU sends the inference result to the CPU, and the CPU may generate a control instruction based on the inference result, to control a steering component, a power component, and the like of a vehicle.

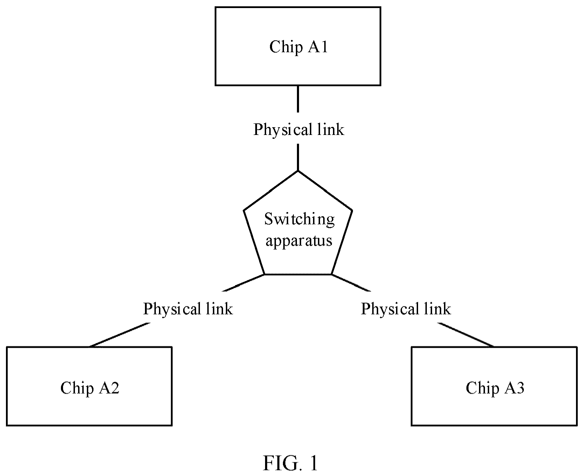

As shown in FIG. 1, chips such as a chip A1, a chip A2, and a chip A3 are connected to each other through physical links, to perform data transmission. The physical links between the chips may use a standard protocol, for example, a peripheral component interconnect express (peripheral component interconnect express, PCIe) or a compute express link (compute express link, CXL). The physical links between the chips may alternatively use a private protocol, for example, a computer application programming interface (computer application programming interface, CAPI).

When different chips collaborate to process tasks such as AI computing and model rendering, a large amount of data needs to be transmitted between the chips. Limited by a manufacturing process of the chips, chip implementation complexity, chip power consumption, electrical characteristics, and the like, a transmission capability of a single physical link cannot meet requirements for data transmission between the chips. Therefore, two chips perform data transmission through two or more physical links.

In a multi-physical-link-based data transmission solution, to-be-transmitted data is segmented by using a multipath transmission control protocol (multipath transmission control protocol, MPTCP), and encapsulated into different data packets. Then, different data packets are transmitted through different transmission channels. After the data packets reach a destination end, the packets need to be assembled. Correct data can be obtained only after the packets are correctly assembled. In this solution, data segmentation and assembly need to be performed, resulting in a relatively high data transmission delay and relatively high power consumption.

An embodiment of this application provides a data transmission solution, so that one chip can directly perform a read/write operation in a storage device of another chip through a plurality of transmission channels, thereby implementing concurrent data transmission through the plurality of transmission channels, and reducing the data transmission delay and power consumption.

The following describes the data transmission solution provided in this embodiment of this application.

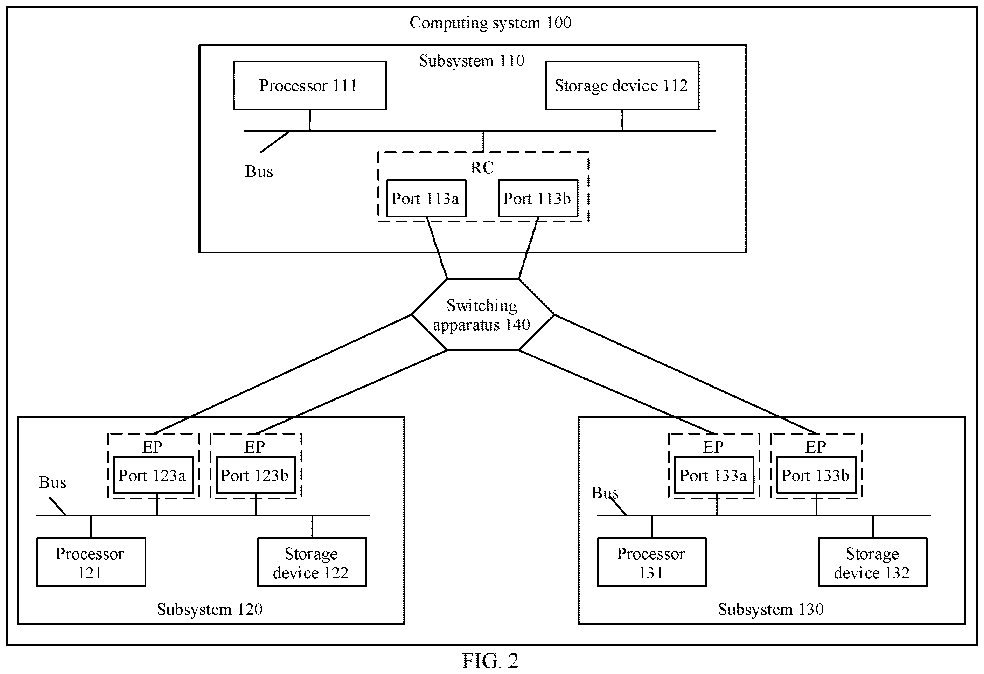

FIG. 2 shows a computing system 100. The computing system 100 may include a subsystem 110 and a subsystem 120. For example, the computing system 100 may further include a subsystem 130 and more subsystems. In the following description, when the subsystem 110, the subsystem 120, and the subsystem 130 are not specially distinguished, these subsystems may be briefly referred to as subsystems.

Each subsystem includes a processor, a storage device, and at least two input/output (input output, IO) ports. For example, the subsystem 110 includes a processor 111, a storage device 112, an IO port 113a, and an IO port 113b; the subsystem 120 includes a processor 121, a storage device 122, an IO port 123a, and an IO port 123b; and the subsystem 130 includes a processor 131, a storage device 132, an IO port 133a, and an IO port 133b.

In some embodiments, one subsystem may include one or more processors. In some embodiments, the processor in the subsystem may be a multi-core processor.

In some embodiments, the storage device in the subsystem may be a memory (memory). In some embodiments, the storage device in the subsystem may be a hard disk drive. In some embodiments, the storage device in the subsystem may be a register.

In some embodiments, the processor, the storage device, and the IO port in the subsystem may be packaged into a chip. Particularly, for a dedicated chip (for example, a GPU, an NPU, or an FPGA), the dedicated chip includes a processor, a storage device, and an IO port, and the dedicated chip may be used as a subsystem. In some embodiments, the processor, the storage device, and the IO port in the subsystem may not be packaged into a chip, and the processor, the storage device, and the IO port may exist independently of each other. For example, the processor in the subsystem may be a CPU, the storage device may be a memory module or a hard disk drive, and the IO port may be a network adapter.

Components such as the processor, the storage device, and the IO port in a same subsystem may be connected through a bus (bus). That is, a bus is disposed in a subsystem, and components in the subsystem are connected to the bus, and are connected to each other through the bus.

There are at least two transmission channels between two subsystems. The transmission channel herein is a physical link, and may also be referred to as a physical channel, or may be briefly referred to as a channel. One end of the transmission channel is connected to one IO port of one of the two subsystems, and the other end of the transmission channel is connected to one IO port of the other of the two subsystems, so that the components in the two subsystems may be connected through a bus in the subsystem and a transmission channel between the subsystems. The IO port may also be referred to as a port connected to the transmission channel of the IO port.

In some embodiments, the transmission channel may perform data transmission by using a standard protocol, for example, a PCIe. When the transmission channel uses the PCIe protocol, the transmission channel may be referred to as a PCIe link. When the transmission channel is a PCIe link, an IO port in a subsystem in the computing system 100 may be integrated into a root complex (root complex, RC) of the PCIe link, and an IO port in another subsystem may be used as an endpoint (endpoint, EP) of the PCIe link. In an example, the IO port 113a and the port 113b in the subsystem 110 shown in FIG. 1 may be integrated into an RC.

In some embodiments, the transmission channel may also use a private protocol, for example, a CAPI.

In some embodiments, different transmission channels may use different protocols. For example, some transmission channels use a standard protocol, and some transmission channels use a private protocol. In an example, some transmission channels use a PCIe protocol, and some transmission channels use a CXL protocol.

In some embodiments, a transmission channel between two subsystems may be directly connected to IO ports of the two subsystems.

In some embodiments, as shown in FIG. 2, the computing system 100 further includes a switching apparatus 140. A transmission channel between two subsystems is connected to IO ports of the two subsystems through the switching apparatus 140.

A processor of at least one subsystem in the computing system 100 is a general-purpose processor, for example, a CPU. A subsystem whose processor is a general-purpose processor may be referred to as a general-purpose subsystem. For example, as shown in FIG. 1, the processor of the subsystem 110 is a general-purpose processor, that is, the subsystem 110 is a general-purpose subsystem in the computing system 100. An application may run on the general-purpose subsystem.

The application may use at least two subsystems in the computing system 100 to execute a task. In other words, the application may assign tasks to the at least two subsystems, that is, the tasks are handed over to the at least two subsystems for execution. The tasks allocated to different subsystems may be different. For example, the application may be a 3D game application, and the 3D game application may allocate a rendering task of a 3D model to one or more subsystems, and allocate a game picture display task to one or more other subsystems.

The application may determine to-be-transmitted data. Specifically, the application may determine a source address of the to-be-transmitted data, that is, determine a specific address that is in a storage device and that is of the to-be-transmitted data. The application may further determine a destination address of the to-be-transmitted data, that is, determine a specific address that is in a storage device and to which the to-be-transmitted data is to be transmitted. That is, the application may determine data that needs to be transmitted between the subsystems, determine a subsystem in which the data is located, and a storage address (that is, the source address) of the data in a storage device of the subsystem, and may further determine which subsystems the data needs to be transmitted to, and specific storage addresses (destination address) of the destination end of the data after the data is transmitted to the destination end.

It may be easily understood that an application is run in a subsystem, and an operation performed by the application is specifically an operation performed by the subsystem running the application, or an operation performed by the subsystem by running the application. More specifically, the operation performed by the subsystem by running the application is an operation performed by a processor of the subsystem by running the application.

The foregoing example has described the structure of the computing system 100. The following describes, with reference to the computing system 100, a data transmission solution provided in an embodiment of this application.

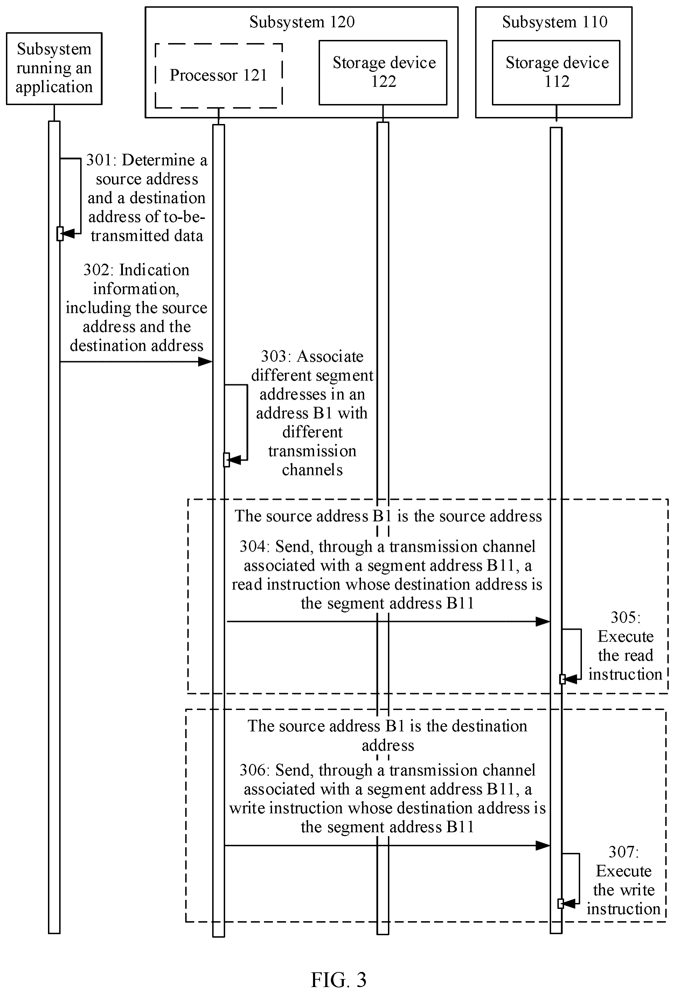

Refer to FIG. 3. A subsystem running an application may perform step 301 to determine a source address and a destination address of to-be-transmitted data.

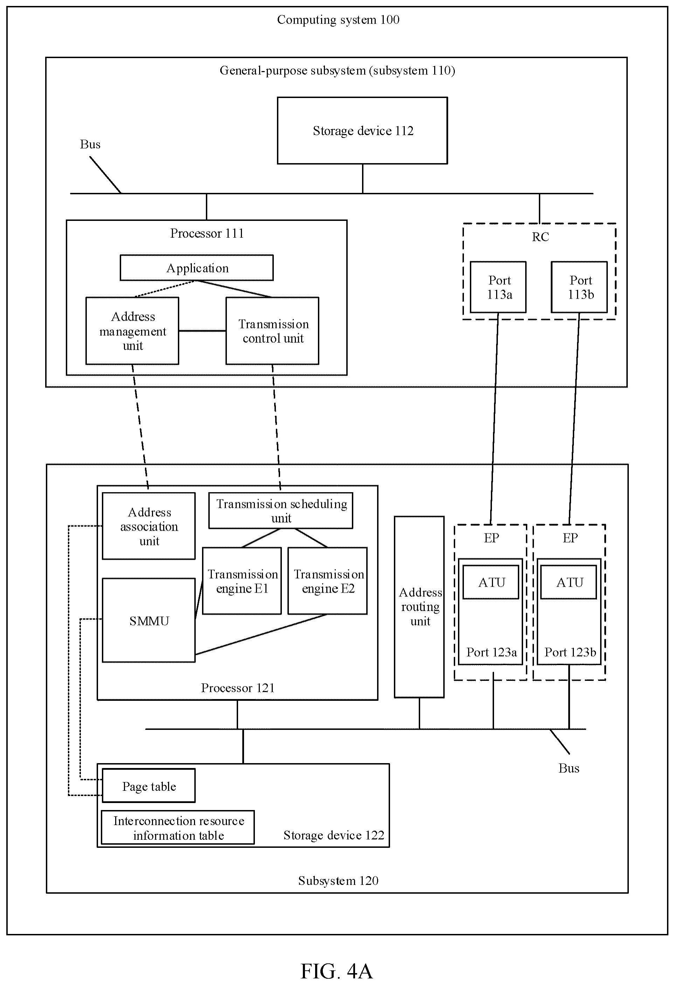

The subsystem running the application may also be referred to as a general-purpose subsystem. That is, in the computing system 100, if an application is run in a subsystem, the subsystem may be referred to as a general-purpose subsystem. In some embodiments, as shown in FIG. 4A, it may be assumed that the subsystem 110 runs an application, that is, the subsystem 110 is a general-purpose subsystem.

Step 301 is performed by the general-purpose subsystem by running the application. In this embodiment of this application, an operation performed by the general-purpose subsystem by running the application may be referred to as an operation performed by the application. The operation performed by the application or the operation performed by the general-purpose subsystem by running the application is an operation performed by a processor of the general-purpose subsystem by running the application.

For example, in a running process of the application, a subsystem may be indicated to execute a task, and the task requires data in another subsystem. In this case, the data needs to be transmitted from a source subsystem to a target subsystem. That is, the data needs to be transmitted between the source subsystem and the target subsystem. The data that needs to be transmitted is the to-be-transmitted data. The source subsystem is the subsystem in which the to-be-transmitted data is located before being transmitted. The target subsystem is a transmission destination of the to-be-transmitted data, that is, a subsystem to which the to-be-transmitted data is transmitted. An address of storage space that is in a storage device of the source subsystem and that stores the to-be-transmitted data is referred to as a source address of the to-be-transmitted data. The application may obtain information about data stored in a storage device of each subsystem, where the information may include an address of storage space for storing the data, description information of the data, and the like, so that the application may learn of the source address of the to-be-transmitted data. The destination address of the to-be-transmitted data is an address of storage space that is in the storage device of the target subsystem and that is used to store the to-be-transmitted data. When the application needs to transmit the data from the source subsystem to the target subsystem, the application may apply to the storage device of the target subsystem for the storage space used to store the data, to obtain the destination address. For example, as shown in FIG. 4A, the general-purpose subsystem includes an address management unit. The application may apply, by using the address management unit, to the storage device of the target subsystem for the storage space used to store the data, to obtain the destination address. There is a correspondence between the source address and the destination address of the to-be-transmitted data. After data at a segment address in the source address is transmitted to the target subsystem, the data is stored at an address that is in the destination address and that corresponds to the segment address.

The source subsystem and the target subsystem are different subsystems in the computing system 100. When data in the general-purpose subsystem needs to be transmitted to another subsystem, the general-purpose subsystem is also a source system. When the general-purpose subsystem needs to receive data from another subsystem, the general-purpose subsystem may also be a target subsystem.

In some embodiments, the source address and the destination address may be specifically virtual addresses (virtual address, VA). The source virtual address is a virtual address of storage space in which the to-be-transmitted data is located and that is in the source subsystem, and the destination virtual address is a virtual address of storage space in which the to-be-transmitted data is stored and that is in the target subsystem. The virtual address is mapped to a physical address (physical address, PA). A mapping relationship between the virtual address and the physical address in a storage device may be stored in a page table of the storage device.

In some embodiments, the source address may include a source virtual address and a source physical address, and the destination address may include a destination virtual address and a destination physical address. The source physical address is a physical address (physical address, PA) of storage space in which the to-be-transmitted data is located and that is in the source subsystem, and the destination physical address is a physical address of storage space in which the to-be-transmitted data is stored and that is in the target subsystem. There is a mapping relationship between the source virtual address and the source physical address, and there is a mapping relationship between the destination virtual address and the destination physical address. When the application needs to transmit data from the source subsystem to the target subsystem, the application may obtain, from an operating system, a source physical address mapped to a source virtual address, and obtain, from the operating system, a destination physical address mapped to a destination virtual address, to obtain the source physical address and the destination physical address.

In some embodiments, the source address and the destination address may be specifically physical addresses.

The subsystem running the application, that is, the general-purpose subsystem, may perform step 302, to send indication information of the to-be-transmitted data to the source subsystem or the target subsystem of the to-be-transmitted data. The indication information includes the source address and the destination address of the to-be-transmitted data. It may be assumed that the subsystem 110 is one of the source subsystem and the target subsystem, and the subsystem 120 is the other of the source subsystem and the target subsystem. That is, in step 302, the general-purpose subsystem may send the indication information of the to-be-transmitted data to the subsystem 110 or the subsystem 120.

The indication information of the to-be-transmitted data is used by a subsystem that receives the indication information to perform a subsequent data transmission operation. In some embodiments, as shown in FIG. 4A, the subsystem 110 is a general-purpose subsystem. The general-purpose subsystem usually runs a relatively large quantity of applications, and a running status of the general-purpose subsystem has an important impact on an overall running status of the computing system 100. Therefore, to avoid increasing a load of the general-purpose subsystem, that is, to avoid increasing the load of the subsystem 110, in step 302, the source address and the destination address of the to-be-transmitted data are sent to the subsystem 120, and the subsystem 120 performs a subsequent data transmission operation.

In some embodiments, as shown in FIG. 4A, the general-purpose subsystem may include a transmission control unit and an address management unit. The transmission control unit may provide a data transmission interface for an application. When the application needs to perform data transmission, a source address and a destination address of the to-be-transmitted data may be input to the transmission control unit through the data transmission interface. The transmission control unit sends the source address and the destination address of the to-be-transmitted data to the address management unit. The address management unit may include the source address and the destination address of the to-be-transmitted data in indication information, and the indication information is sent to the source subsystem or the target subsystem of the to-be-transmitted data in step 302. For example, both the transmission control unit and the address management unit may be software units in a processor that runs a general-purpose subsystem.

Next, the data transmission solution provided in this embodiment of this application is described by using an example in which the subsystem 110 is one of the source subsystem and the target subsystem, the subsystem 120 is the other of the source subsystem and the target subsystem, and the indication information of the to-be-transmitted data is sent to the subsystem 120 in step 302.

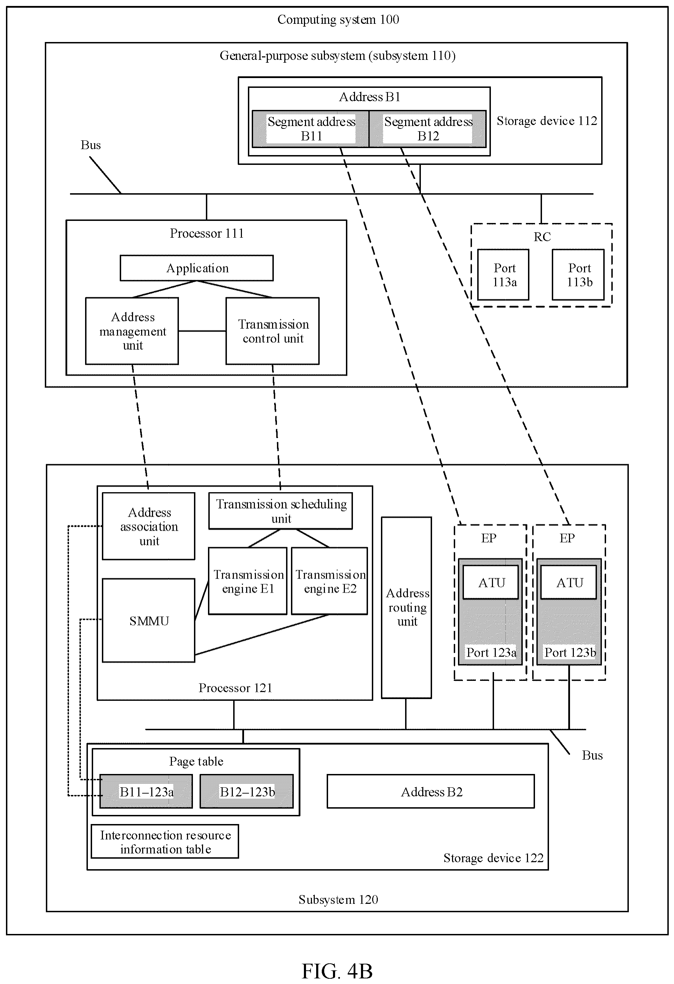

As described above, the indication information of the to-be-transmitted data includes the source address and the destination address of the to-be-transmitted data. It may be assumed that an address B1 is one of the source address and the destination address of the to-be-transmitted data, and an address B2 is the other of the source address or the destination address of the to-be-transmitted data. As shown in FIG. 4B, the address B1 is an address of storage space in a storage device of the subsystem 110, that is, the storage device 112. The address B2 is an address of storage space in a storage device of the subsystem 120, that is, the storage device 122. When the address B1 is the source address of the to-be-transmitted data, the subsystem 110 is the source subsystem of the to-be-transmitted data; and correspondingly, the address B2 is the destination address of the to-be-transmitted data, and the subsystem 120 is the target subsystem of the to-be-transmitted data. When the address B2 is the source address of the to-be-transmitted data, the subsystem 120 is the source subsystem of the to-be-transmitted data; and correspondingly, the address B1 is the destination address of the to-be-transmitted data, and the subsystem 110 is the target subsystem of the to-be-transmitted data.

Refer to FIG. 3. The processor 121 of the subsystem 120 may receive the source address and the destination address of the to-be-transmitted data. After receiving the source address and the destination address of the to-be-transmitted data, the processor 121 may identify which one of the source address and the destination address is a local address and which one is a remote address. The local address of the processor 121 is an address in a storage device of a subsystem (that is, the subsystem 120) in which the processor 121 is located. The remote address is a non-local address. More specifically, as described above, the address B1 is one of the source address and the destination address of the to-be-transmitted data, and the address B2 is the other of the source address or the destination address of the to-be-transmitted data. The address B2 is an address in the storage device of the subsystem 120, that is, the address B2 is the local address of the processor 121. The address B2 is an address in the storage device of the subsystem 110, that is, the address B1 is the remote address of the processor 121.

The processor 121 may perform step 303 to associate different segment addresses in the address B1 (that is, the remote address) with different transmission channels. Details are as follows.

In some embodiments, as shown in FIG. 4A, the processor 121 may include an address association unit. The address association unit may perform step 303. In an example, the address association unit may be a software unit running on the processor 121. In an example, the address association unit may be hardware. In an example of this example, the processor 121 includes a plurality of processors, and the address association unit may be one or more processors in the plurality of processors. In another example of this example, the processor 121 is a multi-core processor, and the address association unit may be one or more computing cores in the multi-core processor.

In step 303, N segment addresses in the address B1 may be associated with N transmission channels, where N is an integer greater than 1. One segment address is an address segment in the address B1, and the N segment addresses are N address segments in the address B1. In addition, different segment addresses do not overlap. The address B1 corresponds to the to-be-transmitted data, and different segment addresses correspond to different data in the to-be-transmitted data. The different data herein is data stored at different addresses, and does not refer to different data content. The content of the data may be the same or may be different.

In some embodiments, the N segment addresses form the address B1. That is, a set of the N segment addresses is the address B1.

In some embodiments, the N transmission channels are all transmission channels between the subsystem 120 and the subsystem 110. As shown in FIG. 4A, the subsystem 120 has an interconnection resource information table. The interconnection resource information table records information about transmission channels between the subsystem 120 and another subsystem such as the subsystem 110. The information about the transmission channels may include information such as a quantity of the transmission channels and an identifier of each transmission channel. Therefore, based on the interconnection resource information table, the processor 121 may obtain and identify all transmission channels between the subsystem 120 and the subsystem 110.

In some embodiments, the N transmission channels are available transmission channels between the subsystem 120 and the subsystem 110. The available transmission channel is a transmission channel that is not fully loaded, that is, a transmission channel that has an available transmission capability (for example, a bandwidth) and can transmit data. As shown in FIG. 4A, the subsystem 120 has an interconnection resource information table. The interconnection resource information table records information about transmission channels between the subsystem 120 and another subsystem such as the subsystem 110. The information about the transmission channels may include information such as a quantity of the transmission channels, an identifier of each transmission channel, and transmission capability usage (for example, bandwidth usage) of each transmission channel. Therefore, based on the interconnection resource information table, the processor 121 may obtain and identify an available transmission channel between the subsystem 120 and the subsystem 110. In an example, the interconnection resource information table may be shown in Table 1.

**Table 1**

| Transmission channel number | Transmission channel type | Bandwidth usage | Bandwidth value | Port IO address | Address translation unit (address translation unit, ATU) information | Channel status |
|---|---|---|---|---|---|---|
| 1 | PCIe | | | | | Running/Idle |
| 2 | PCIe | | | | | Running/Idle |
| ... | ... | ... | ... | ... | ... | ... |
| n | PCIe | | | | | Running/Idle |

In some embodiments, in step 303, the processor 121 may divide the address B1 into N segment addresses based on the quantity of transmission channels in the N transmission channels, that is, N, to obtain the N segment addresses. Then, the N segment addresses may be associated with the N transmission channels. Different segment addresses are associated with different transmission channels, that is, the N segment addresses are associated with the N transmission channels in a one-to-one manner.

In an example of these embodiments, the address B1 may be evenly divided into N address segments, that is, address lengths of different segment addresses in the N segment addresses are equal. Then, one of the N segment addresses may be associated with one of the N transmission channels. That is, in this implementation, lengths of segment addresses associated with different transmission channels in the N transmission channels are equal.

In another example of these embodiments, the address B1 may be divided into N segment addresses based on transmission capabilities of transmission channels in the N transmission channels. Then, the N segment addresses are associated with the N transmission channels based on transmission capabilities of the transmission channels of the N transmission channels and a length of each of the N segment addresses. A transmission channel associated with a segment address with a longer length has a stronger transmission capability, that is, the length of the segment address is positively correlated with the transmission capability of the transmission channel associated with the segment address. In an example, the transmission capability of the transmission channel is a currently available transmission capability of the transmission channel, for example, an available bandwidth. In an example, the transmission capability of the transmission channel is quality of service (quality of service, QoS) of the transmission channel. In an example, the transmission capability of the transmission channel includes a current available bandwidth and QoS.

The processor 121 may establish an association relationship between the segment address and the transmission channel. In some embodiments, the association relationship between the segment address and the transmission channel may be recorded in a page table of the subsystem 120. For example, the page table may be stored in the storage device 122.

In some embodiments, the segment address associated with the transmission channel may be specifically a virtual address. In some embodiments, the segment address associated with the transmission channel may be specifically a physical address.

The association between the segment address and the transmission channel may be specifically an association between the segment address and a local port of the transmission channel. The port associated with the segment address is also referred to as a port of the transmission channel associated with the segment address. The local port of the transmission channel is a port of a subsystem in which a processor that establishes an association relationship between a segment address and the transmission channel is located. For example, as shown in FIG. 4B, when the association between the segment address and the transmission channel is established by the processor 121, local ports of the transmission channel are a port 123a and a port 123b. It may be assumed that the N segment addresses are a segment address B11 and a segment address B12 respectively. In this case, the established association between the segment address and the transmission channel may be specifically an association between the segment address B11 and the port 123a and an association between the segment address B12 and the port 123b.

In Embodiment D1, when a transmission protocol used by a transmission channel is a standard protocol, a port IO address of a local port of the transmission channel is different from physical addresses of storage spaces of subsystems (including the subsystem 110 and the subsystem 120). In this case, the association between the segment address and the local port of the transmission channel may be specifically an association between the segment address and the port IO address. The port IO address may also be briefly referred to as a port address. The port address associated with the segment address may also be referred to as a port address of the transmission channel associated with the segment address. Physical addresses of storage spaces of different subsystems are usually independently addressed. In correspondence to the subsystem 120 or the processor 121, the local port of the transmission channel is a port that is on the subsystem 120 side and that is of a transmission channel between the subsystem 120 and the subsystem 110.

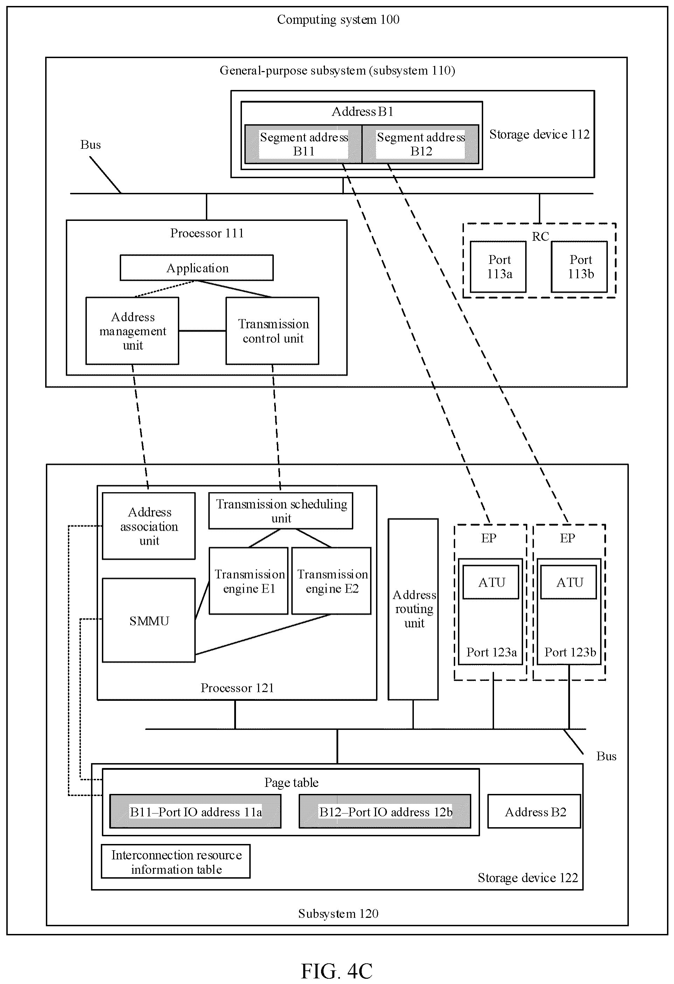

In an example of Embodiment D1, as shown in FIG. 4C, when the computing system 100 is initialized, addresses of all spaces in the storage device 112 are mapped to each port that is in the subsystem 120 and that is used to connect to the subsystem 110. A port that is in the subsystem 120 and that is used to connect to the subsystem 110 is a port that is on the subsystem 120 side and that is of the transmission channel between the subsystem 120 and the subsystem 110, for example, a port 123a and a port 123b in FIG. 4C. For example, the port 123a and the port 123b in the subsystem 120 are used to connect to the subsystem 110. All space addresses in the storage device 112 are mapped to the port 123a, and are also mapped to the port 123b. The addresses of all the spaces in the storage device 112 are mapped to port IO addresses of the port 123a in a one-to-one manner, and the addresses of all the spaces in the storage device 112 are mapped to port IO addresses of the port 123b in a one-to-one manner. That is, any address segment in the storage device 112 is mapped to a segment of the port IO addresses of the port 123a, and is also mapped to a segment of the port IO addresses of the port 123b. A segment address in the address B1 is an address segment in the storage device 112. Before step 302, the segment address is mapped to a segment of the port IO addresses of the port 123a, and is also mapped to a segment of the port IO addresses of the port 123b. For ease of description, a segment of port IO addresses of a port may be briefly referred to as an IO address.

The segment address B11 and the segment address B12 are used as an example. The segment address B11 is mapped to both an IO address 11a in the port IO addresses of the port 123a and an IO address 11b in the port IO addresses of the port 123b. The segment address B12 is mapped to both an IO address 12a in the port IO addresses of the port 123a and an IO address 12b in the port IO addresses of the port 123b. In step 302, associating the segment address with the port IO address specifically is to select one IO address from a plurality of IO addresses mapped to the segment address, and associate the selected IO address with the segment address. As shown in FIG. 4C, associating the segment address B11 with the port 123a is to associate the segment address B11 with the IO address 11a, that is, associate the segment address B11 with the IO address 11a. Associating the segment address B12 with the port 123b is to associate the segment address B12 with the IO address 12b.

In Embodiment D2, when physical addresses of storage spaces of different subsystems use unified addressing, physical addresses of the different subsystems do not conflict. When a transmission protocol of a transmission channel between subsystems is a private protocol, the subsystem is allowed to freely set a port IO address of a port of the transmission channel. The port IO address of the port may also be briefly referred to as a port address of the port. When the physical addresses of the storage spaces of the different subsystems use unified addressing, and the transmission protocol of the transmission channel used by the subsystem is a private protocol, the physical address of space in the storage device 112 may be used as the port IO address of the port of the transmission channel on the subsystem 120 side. When there are a plurality of transmission channels, channel identifiers may be set for different channels, and the channel identifiers are used to distinguish between the different channels. The channel identifier of the transmission channel and the port IO address of the transmission channel form information representing the transmission channel. When an association relationship between a segment address and a transmission channel is established, the segment address may be associated with an identifier of a corresponding transmission channel and a corresponding port IO address of the transmission channel, where the corresponding port IO address is a segment address (the segment address is a physical address) or a physical address corresponding to the segment address (the segment address is a virtual address).

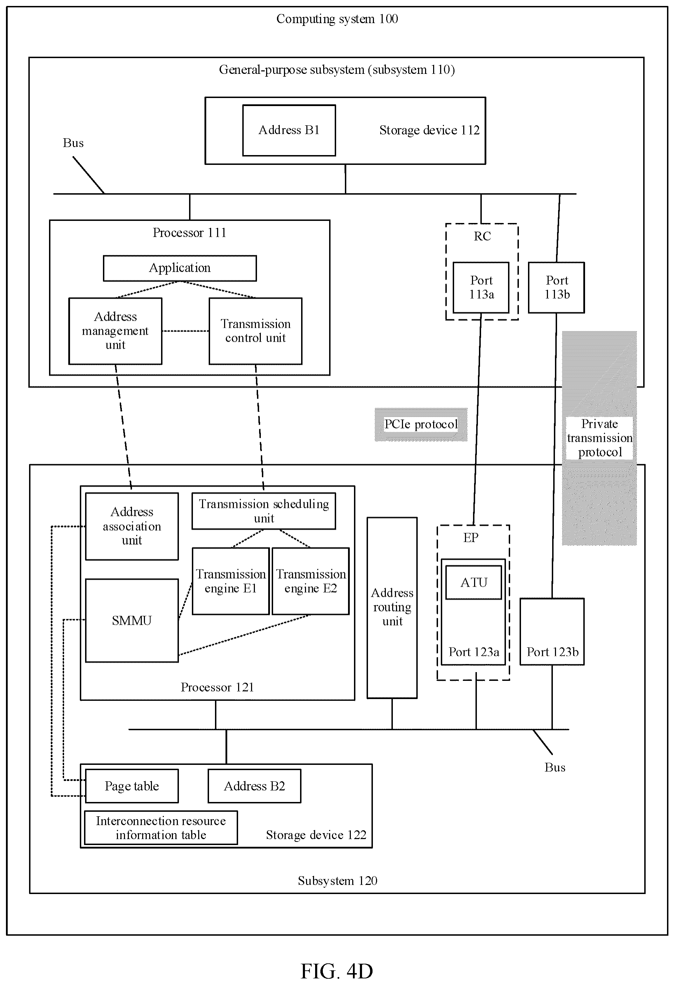

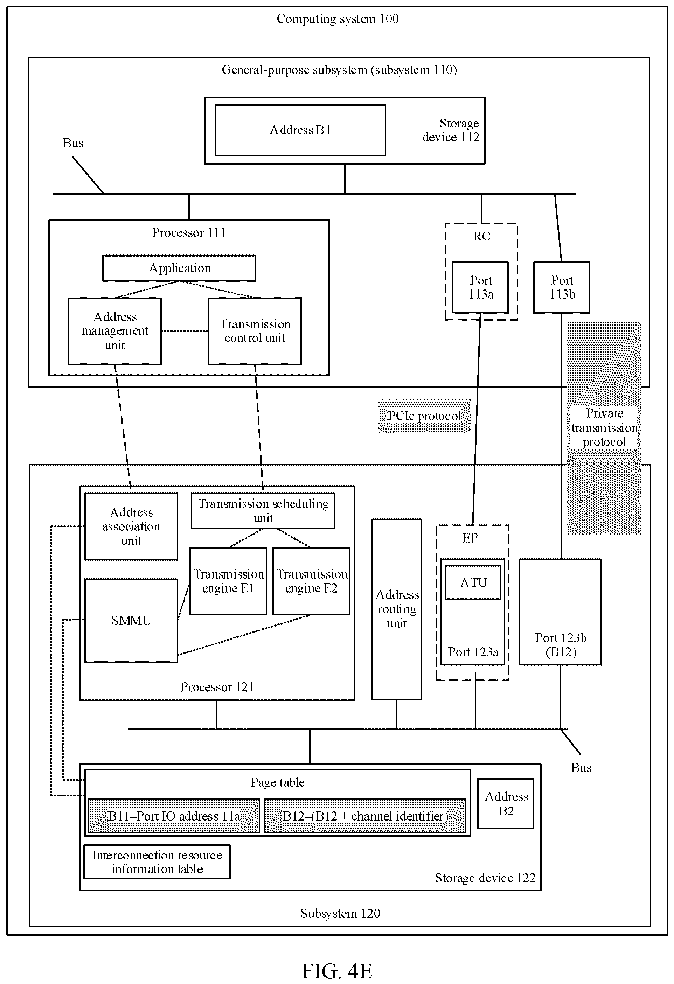

In some embodiments, as shown in FIG. 4D, transmission protocols of some transmission channels between the subsystem 110 and the subsystem 120 are standard protocols, and transmission protocols of some transmission channels are private protocols. For a transmission channel whose transmission protocol is a standard protocol, an association relationship between a segment address and the transmission channel is established by using the solution in the foregoing Embodiment D1. For a transmission channel whose transmission protocol is a private protocol, an association relationship between a segment address and a transmission channel is established by using the solution in the foregoing Embodiment D1. It is assumed that the segment address B11 is associated with a transmission channel corresponding to the port 123a, and the segment address B12 is associated with a transmission channel corresponding to the port 123b. As shown in FIG. 4E, a page table records an association relationship between the segment address B11 and the transmission channel corresponding to the port 123a by recording an association relationship between the segment address B11 and the port IO address 11a. The page table records an association relationship between the segment address B12 and the transmission channel corresponding to the port 123b by recording an association relationship between the segment address B12 and first information of the port 123b. The first information of the port 123b includes information about a segment address and a channel identifier of the transmission channel corresponding to the port 123b. When the segment address 12 is a physical address, segment address information is the segment address 12. When the segment address is a virtual address, the segment address information is a physical address corresponding to the segment address 12 (the segment address 12 is a virtual address).

In this way, in step 303, different segment addresses in the address B1 may be associated with different transmission channels, to obtain association relationships between the segment addresses in the address B1 and the transmission channels.

After completing the association relationship between the segment address and the transmission channel in the address B1, the processor 121 may transmit, through the transmission channel associated with the segment address, data corresponding to the segment address. When the segment address is a segment address in a source address of the to-be-transmitted data, the data corresponding to the segment address is data that has been stored at the segment address, and the data is partial data in the to-be-transmitted data. When the segment address is a segment address in a destination address of the to-be-transmitted data, the data corresponding to the segment address is data to be stored at the segment address, and the data is partial data in the to-be-transmitted data. The following uses the segment address B11 as an example for description.

When the segment address B1 is the source address of the to-be-transmitted data, that is, when the segment address B11 is a segment address in the source address of the to-be-transmitted data, the processor 121 may read data at the segment address B11 through a transmission channel associated with the segment address B11, and store the read data at an address that is in the destination address (that is, the address B2) of the to-be-transmitted data and that corresponds to the segment address B11. Details are as follows.

Refer to FIG. 3. The processor 121 may perform step 304, to send, through the transmission channel associated with the segment address B11, a read instruction whose destination address is the segment address B11 to a storage device of the subsystem 110, that is, the storage device 112. That is, the read instruction is sent to the storage device 112 through the transmission channel associated with the segment address B11. The destination address of the read instruction is the segment address B11, and is used to read the data at the segment address B11, to transmit the data at the segment address B11 to the subsystem 120 through the transmission channel associated with the segment address B11.

When the segment address B11 is a physical address, the destination address of the read instruction is the segment address B11. When the segment address B11 is a virtual address, the destination address of the read instruction is specifically a physical address to which the segment address B11 is mapped.

In some embodiments, the general-purpose subsystem may send a transmission task indication to the subsystem 120, where the transmission task indication is used to indicate the processor 121 to send an operation instruction to the storage device 112. When the subsystem 110 is a source subsystem, that is, when the address B1 is the source address of the to-be-transmitted data, the transmission task indication is used to indicate the processor 121 to send a read instruction to the storage device 112, that is, an operation instruction indicated by the transmission task indication is a read instruction. The processor 121 may perform step 304 in response to the transmission task indication. For example, the transmission task indication may be included in the indication information sent to the subsystem 120 by performing step 302, to send the transmission task indication to the subsystem 120.

In an example of this embodiment, as shown in FIG. 4A, the general-purpose subsystem includes a transmission control unit. An application may send the transmission task indication to the subsystem 120 by using the transmission control unit. For example, the transmission control unit may include the transmission task indication in indication information to be sent to the subsystem 120, to send the transmission task indication to the subsystem 120.

As shown in FIG. 4A, the subsystem 121 may include a transmission scheduling unit and at least one transmission engine. In an example, the transmission scheduling unit or the transmission engine may be a software unit running on the processor 121. In an example, the transmission scheduling unit or the transmission engine may be a hardware unit. In an example of this example, the processor 121 includes a plurality of processors, and the transmission scheduling unit or the transmission engine may be one or more processors in the plurality of processors. In another example of this example, the processor 121 is a multi-core processor, and the transmission scheduling unit or the transmission engine may be one or more computing cores in the multi-core processor. The transmission scheduling unit may invoke the transmission engine in response to the transmission task indication, and generate and send an operation instruction. When the address B1 is the source address of the to-be-transmitted data, the operation instruction is specifically a read instruction.

The transmission engine is a unit, module, or apparatus that can access a storage device and migrate data between memories. In some embodiments, the transmission engine may be a direct memory access (direct memory access, DMA) unit. In some embodiments, the transmission engine may be a remote direct memory access (remote direct memory access, RDMA) unit. In some embodiments, when the subsystem includes a plurality of transmission engines, the plurality of transmission engines may be transmission engines of a same type, for example, all are DMA units or RDMA units. In some embodiments, when the subsystem includes a plurality of transmission engines, the plurality of transmission engines may include different types of transmission engines, for example, some transmission engines are DMA units, and some transmission engines are RDMA units.

In some embodiments, as shown in FIG. 4A, the subsystem 121 includes a plurality of transmission engines such as a transmission engine E1 and a transmission engine E2. The transmission scheduling unit may select, from a plurality of transmission engines, the transmission engine for transmitting the to-be-transmitted data. In an example, the transmission scheduling unit may use all transmission engines in the subsystem 120 as transmission engines for transmitting the to-be-transmitted data. In an example, the transmission scheduling unit may use a transmission engine whose load rate is lower than a threshold in the subsystem 120 as the transmission engine for transmitting the to-be-transmitted data. The threshold may be a preset value, for example, 50% or 30%. In an example, the transmission scheduling unit may use k transmission engines with lowest load rates in the subsystem 120 as the transmission engines for transmitting the to-be-transmitted data. In this way, the k transmission engines for transmitting the to-be-transmitted data may be obtained, where k is an integer greater than or equal to 1.

In this embodiment, there is no binding relationship between the transmission engine and the transmission channel. That is, the k transmission engines used to transmit the to-be-transmitted data may transmit data by using different transmission channels, or may transmit data by using a same transmission channel. Details are as follows.

When k = 1, the transmission engine may simultaneously transmit data corresponding to segment addresses associated with a plurality of transmission channels. For example, it is assumed that the segment address B11 is associated with the transmission channel of the port 123a, and the segment address B11 is associated with the transmission channel of the port 123b. The transmission engine may transmit, to the storage device 112 through the transmission channel corresponding to the port 113a, a read instruction whose destination address is the segment address B11. Similarly, the transmission engine may transmit, to the storage device 112 through the transmission channel corresponding to the port 123b, a read instruction whose destination address is the segment address B12.

When k is greater than 1, the transmission scheduling unit may divide the to-be-transmitted data into k subtasks, where each subtask is transmitted by one transmission engine. When segment addresses corresponding to data in one subtask are associated with a same transmission channel, a transmission engine corresponding to the subtask transmits the subtask on the transmission channel. When data in one subtask corresponds to a plurality of segment addresses, and at least two different segment addresses of the plurality of segment addresses are associated with different transmission channels, the transmission engine transmits the subtask through the different transmission channels. Specifically, the transmission engine may transmit, through the transmission channel, data that is in the subtask and that corresponds to a transmission channel. The transmission engine may transmit, through another transmission channel, data that is in the subtask and that corresponds to the another transmission channel.

More specifically, when k is greater than 1, the transmission scheduling unit may divide the address B1 into k segment addresses, where each segment address corresponds to one transmission engine, and different segment addresses correspond to different transmission engines. When there is an intersection between the segment address F1 in the k segment addresses and one segment address F2 in the N segment addresses, a transmission engine corresponding to the segment address F1 reads data in the intersection through a transmission channel associated with the segment address F2. That is, the transmission engine corresponding to the segment address F1 sends, through the transmission channel associated with the segment address F2, a read instruction whose destination address is the intersection, to read the data in the intersection.

The segment address F1 is any segment address in the k segment addresses, and the segment address F2 is any segment address in the N segment addresses.

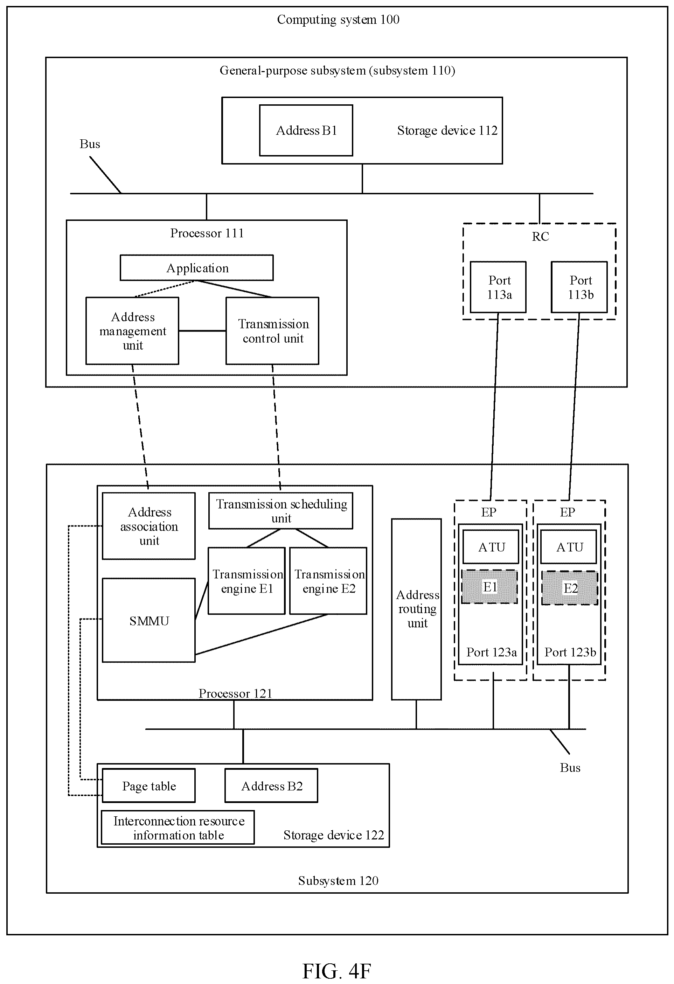

In some embodiments, as shown in FIG. 4F, each transmission channel between the subsystem 110 and the subsystem 120 may be associated with at least one transmission engine. For example, a transmission channel corresponding to a port 123a is associated with a transmission engine E1, and a transmission channel corresponding to a port 123b is associated with a transmission engine E2. The transmission engine associated with the transmission channel is configured to transmit, through the transmission channel, data corresponding to a segment address associated with the transmission channel. When each transmission channel is associated with a plurality of transmission engines, during data transmission, a transmission engine with a relatively low load in the plurality of transmission engines is selected for data transmission. Specifically, it may be assumed that one transmission channel is associated with a first transmission engine and a second transmission engine. When a load of the first transmission engine is less than a load of the second transmission engine, the processor 121 uses the first transmission engine to read the data at the segment address B11 through the transmission channel associated with the segment address B11.

The foregoing example has described the relationship between the transmission engine and the transmission channel. The following describes a specific implementation solution in which the transmission engine transmits data through the transmission channel.

The transmission scheduling unit may allocate the transmission task to the transmission engine, and the transmission task includes the source address and the destination address of the to-be-transmitted data. In some embodiments, the transmission task indication received by the transmission scheduling unit from the general-purpose subsystem includes the source address and the destination address of the to-be-transmitted data. The transmission scheduling unit may allocate the transmission task to the transmission engine based on the source address and the destination address of the to-be-transmitted data included in the transmission task indication. In some embodiments, when there are k transmission engines, the transmission scheduling unit may divide the to-be-transmitted data into k pieces, include a source address and a destination address of each piece of data in the transmission task, and allocate the transmission task to one transmission engine. In some embodiments, as described above, the transmission channel is associated with at least one transmission engine; and the transmission scheduling unit may add, to the transmission task, the source address and the destination address of data associated with the transmission channel, and allocate the transmission task to the transmission engine associated with the transmission channel. For example, the transmission scheduling unit may obtain, based on the association relationship between the segment address and the transmission channel established in step 303, the segment address associated with the transmission channel, and then obtain, based on the segment address, the source address and the destination address of the data corresponding to the segment address (the segment address is the source address or the destination address of the data).

In some embodiments, the source address and the destination address included in the transmission task or the transmission task indication may be virtual addresses. In some embodiments, the source address and the destination address included in the transmission task or the transmission task indication may be physical addresses.

After obtaining the transmission task, the transmission engine may generate a read instruction used to read data at the segment address B11. A destination address of the generated read instruction is the segment address B11, and the read instruction may be referred to as a read instruction C1.

The transmission engine may send the read instruction C1 to an address processing unit. In an example, the address processing unit may be a software unit running on the processor 121. In an example, the address processing unit may be a hardware unit. In an example of this example, the processor 121 includes a plurality of processors, and the address processing unit may be one or more processors in the plurality of processors. In another example of this example, the processor 121 is a multi-core processor, and the address processing unit may be one or more computing cores in the multi-core processor. In an example, the address processing unit may be a system memory management unit (system memory management unit, SMMU).

The address processing unit is configured to translate a destination address of the read instruction C1 into a port address of a transmission channel associated with the segment address B11, to obtain a read instruction C2. Specifically, the address processing unit may obtain the association relationship between the segment address and the transmission channel established in step 303, obtain, based on the association relationship between the segment address and the transmission channel, the port address of the transmission channel associated with the segment address B11, and then translate the destination address of the read instruction C1 into the port address of the transmission channel associated with the segment address B11, to obtain the read instruction C2. In some embodiments, the association relationship between the segment address and the transmission channel is stored in a page table; and the address processing unit may obtain the association relationship between the segment address B11 and the transmission channel from the page table, and obtain, based on the association relationship between the segment address B11 and the transmission channel, the port address of the transmission channel associated with the segment address B11.

After translating the destination address of the read instruction C1 into the port address of the transmission channel associated with the segment address B11, to obtain the read instruction C2, the address processing unit may send the read instruction C2 to a bus. The address routing unit in the subsystem 120 may route the read instruction C2 to the port of the corresponding transmission channel based on a destination address of the read instruction C2.

The address routing unit is a hardware unit connected to the bus. The address routing unit has a routing function, and is configured to send, based on a destination address of data (for example, the read instruction C2), the data to a component represented by the destination address (for example, a port of a transmission channel) through the bus. After receiving the read instruction C2, the port of the transmission channel may translate the destination address of the read instruction C2 into a physical address segment. The physical address is the segment address B11 (when the segment address B11 is a physical address) or a physical address mapped to the segment address B11 (when the segment address B11 is a virtual address), and a read instruction C3 is obtained.

In some embodiments, the port of the transmission channel may obtain the association relationship between the segment address and the transmission channel that is established in step 303, and obtain, based on the association relationship between the segment address and the transmission channel, the segment address associated with the transmission channel. When the obtained segment address B11 is a physical address, the destination address of the read instruction C2 is translated into the segment address B11, to obtain the read instruction C3. When the obtained segment address B11 is a virtual address, the segment address B11 is first translated into a physical address, and then the destination address of the instruction C2 is translated into the physical address, to obtain the read instruction C3. For example, as shown in FIG. 4F, the port includes an ATU, and the ATU is configured to translate a port address that is in the read instruction C2 and that is used as a destination address into the segment address B11 or the physical address mapped to the segment address B11.

In some embodiments, for example, in Embodiment D1 described above, a mapping relationship between a port address and a physical address of storage space in the storage device 112 is established for a port of a transmission channel. In this way, the destination address of the read instruction C2 may be translated into a physical address of the storage space to which the destination address (port address) is mapped, to obtain the read instruction C3.

In some embodiments, for example, in Embodiment D2 described above, the port address of the transmission channel is a physical address of storage space in the storage device 112. That is, the destination address of the read instruction C2 is the physical address of the storage space in the storage device 112. In an example, as described above, the segment address B11 is further associated with a channel identifier of a transmission channel, and the read instruction C2 further carries the channel identifier. When a plurality of transmission channels use a physical address of the storage space in the storage device 112 as a port address, the port of the transmission channel may determine, based on the channel identifier carried in the read instruction C2, whether the transmission channel is a transmission channel associated with the segment address B11. If the transmission channel is the transmission channel associated with the segment address B11, the read instruction C2 is used as the read instruction C3. If the transmission channel is not the transmission channel associated with the segment address B11, the read instruction C2 is discarded or deleted.

After obtaining the read instruction C3, the port of the transmission channel may perform step 304, to send the instruction C3 to the storage device 112 through the transmission channel associated with the segment address B11.

In some embodiments, after sending the read instruction to the storage device 112, the port of the transmission channel may feed back instruction sending success information to the transmission engine. The transmission engine may feed back the instruction sending success information to the transmission scheduling unit. After the transmission scheduling unit receives instruction sending success information of all the read instructions corresponding to the to-be-transmitted data, the transmission scheduling unit feeds back the data transmission success information to an application.

Still refer to FIG. 3. The storage device 112 may perform step 305 to execute the read instruction. Specifically, the storage device 112 includes a controller and a storage medium. The controller is configured to read data in storage space of the storage medium based on the read instruction. Specifically, the controller may read, in response to the read instruction, data at a destination address (that is, the segment address B11) of the read instruction, and send the read data to a transmit end (that is, the subsystem 120) of the read instruction through a transmission channel associated with the segment address B11. The destination address of the read instruction is a source address of the to-be-transmitted data. There is a correspondence between the source address and a destination address of the to-be-transmitted data. The subsystem 120 stores the data read by using the read instruction, that is, the data received through the transmission channel associated with the segment address B11, to an address corresponding to the segment address B11 in the destination address of the to-be-transmitted data, to complete data transmission.

When the segment address B1 is the destination address of the to-be-transmitted data, that is, when the segment address B11 is a segment address in the destination address of the to-be-transmitted data, the processor 121 may write the data into the segment address B11 through the transmission channel associated with the segment address B11, where the written data is data at an address that is in the source address (that is, the address B2) of the to-be-transmitted data and that corresponds to the segment address B11. Details are as follows.

Still refer to FIG. 3. The processor 121 may perform step 306, to send, through the transmission channel associated with the segment address B11, a write instruction whose destination address is the segment address B11 to the storage device of the subsystem 110, that is, the storage device 112. That is, the write instruction is sent to the storage device 112 through the transmission channel associated with the segment address B11. A destination address of the write instruction is the segment address B11, and the write instruction carries data that needs to be stored at the segment address B11. The write instruction is used to write, to the segment address B11, data carried in the write instruction, to transmit the data from the subsystem 120 to the subsystem 110. The data carried in the write instruction is the data at the address that is in the address B2 and that corresponds to the segment address B11.

When the segment address B11 is a physical address, the destination address of the write instruction is the segment address B11. When the segment address B11 is a virtual address, the destination address of the write instruction is specifically a physical address to which the segment address B11 is mapped.

In some embodiments, the general-purpose subsystem may send a transmission task indication to the subsystem 120, where the transmission task indication is used to indicate the processor 121 to send an operation instruction to the storage device 112. When the subsystem 110 is a target subsystem, that is, when the address B1 is the destination address of the to-be-transmitted data, the transmission task indication is used to indicate the processor 121 to send a write instruction to the storage device 112, that is, an operation instruction indicated by the transmission task indication is a write instruction. The processor 121 may perform step 306 in response to the transmission task indication. For a specific implementation of the transmission task indication, refer to the foregoing description of step 304. Details are not described herein again.

As shown in FIG. 4A, the subsystem 121 may include a transmission scheduling unit and at least one transmission engine. The transmission scheduling unit may invoke the transmission engine in response to the transmission task indication, and generate and send an operation instruction. When the address B1 is the destination address of the to-be-transmitted data, the operation instruction is specifically a write instruction. For specific implementations of the transmission scheduling unit and the transmission engine, refer to the foregoing description of step 304. Details are not described herein again.

For a relationship between the transmission engine and the transmission channel, refer to the foregoing description of step 304. Details are not described herein again. Different from step 304 in which the transmission engine is configured to generate and transmit a read instruction, in step 306, the transmission engine is configured to generate and transmit a write instruction.

For a manner of translating a destination address of the write instruction and a manner of routing or forwarding the write instruction to a port of a transmission channel, refer to the foregoing descriptions of the destination translation manner of the read instruction and the manner of routing or forwarding the read instruction to the port of the transmission channel. Details are not described herein again.

After obtaining the write instruction whose destination address is the segment address B11, the port of the transmission channel associated with the segment address B1 may perform step 306, to send the write instruction to the storage device 112 through the transmission channel associated with the segment address B11. The write instruction carries data at an address that is in the address B2 and that corresponds to the segment address B11, so that the write instruction may write the data into the segment address B11, to complete data transmission.

In some embodiments, after sending the write instruction to the storage device 112, the port of the transmission channel may feed back instruction sending success information to the transmission engine. The transmission engine may feed back the instruction sending success information to the transmission scheduling unit. After the transmission scheduling unit receives instruction sending success information of all the write instructions corresponding to the to-be-transmitted data, the transmission scheduling unit feeds back the data transmission success information to an application.

Still refer to FIG. 3. The storage device 112 may perform step 307 to execute the write instruction. Specifically, the storage device 112 includes a controller and a storage medium. The controller is configured to write data carried in the write instruction into a destination address of the write instruction, that is, write data at an address that is in the address B2 and that corresponds to the segment address B11 into the segment address B11. In this way, data transmission is completed.

In this way, transmission of the to-be-transmitted data between the subsystem 110 and the subsystem 120 may be completed.

The foregoing has described the data transmission solution provided in the embodiments of this application by using data transmission between the subsystem 110 and the subsystem 120 as an example.

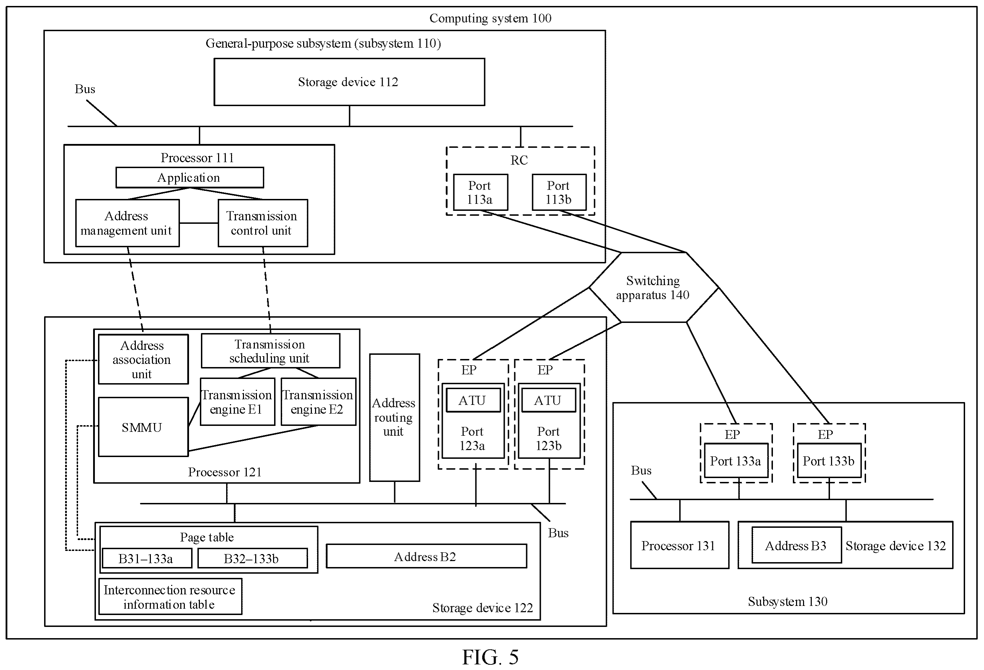

The data transmission solution provided in this embodiment of this application may be further used for data transmission between two other subsystems. Next, with reference to FIG. 5 and FIG. 3, an example in which data transmission is performed between the subsystem 130 and the subsystem 120 and the subsystem 110 is a general-purpose subsystem is used for description.

A subsystem running an application may perform step 301 to determine a source address and a destination address of to-be-transmitted data. One of the source address and the destination address of the to-be-transmitted data is an address of storage space in the storage device of the subsystem 120, and the other of the source address or the destination address of the to-be-transmitted data is an address of storage space in the storage device of the subsystem 130. For other implementation information, refer to the foregoing description of step 301. Details are not described herein again.

A subsystem running the application, that is, a general-purpose subsystem, may perform step 302, to send indication information of the to-be-transmitted data to the source subsystem or the target subsystem of the to-be-transmitted data. The indication information includes the source address and the destination address of the to-be-transmitted data. The subsystem 120 is one of the source subsystem and the target subsystem, and the subsystem 130 is the other of the source subsystem and the target subsystem. That is, in step 302, the general-purpose subsystem may send the indication information of the to-be-transmitted data to the subsystem 130 or the subsystem 120. It may be assumed that in step 302, the general-purpose subsystem sends the indication information of the to-be-transmitted data to the subsystem 120. For other implementation information, refer to the foregoing description of step 302. Details are not described herein again.

The processor 121 may associate different segment addresses in the address B3 with different transmission channels. An address B3 is an address of storage space in a storage device (that is, the storage device 132) of the subsystem 130. The address B3 is the source address or the destination address of the to-be-transmitted data. For example, one segment address B31 in the address B3 may be associated with a transmission channel corresponding to the port 133a, and another segment address B32 in the address B3 may be associated with a transmission channel corresponding to the port 133b. For other implementation information, refer to the foregoing description of step 303. Details are not described herein again.

After associating different segment addresses in the address B3 with different transmission channels, the processor 121 may send, to the storage device 132 through the transmission channel associated with the segment address B31, an operation instruction whose destination address is the segment address B31. After obtaining the operation instruction, the storage device 132 may execute the operation instruction. When the address B3 is the source address of the to-be-transmitted data, the operation instruction is a read instruction. For details, refer to the foregoing descriptions of step 304 and step 305. Details are not described herein again. When the address B3 is the destination address of the to-be-transmitted data, the operation instruction is a write instruction. For details, refer to the foregoing descriptions of step 306 and step 307. Details are not described herein again.

In this way, data transmission between the subsystem 120 and the subsystem 130 may be completed.

In the data transmission solution provided in this embodiment of this application, different addresses in the storage space in which the to-be-transmitted data is located or the addresses in the storage space into which the to-be-written data is to be written are associated with different transmission channels, and data at corresponding addresses is simultaneously transmitted by using different transmission channels, thereby implementing multi-channel concurrent transmission and improving data transmission efficiency. In addition, in this solution, the read instruction or the write instruction is directly sent to the storage device, and the storage device performs a data read operation or a write operation during data transmission, without performing packet segmentation and packet assembly processing on the data, thereby reducing a data transmission delay and power consumption.

Based on the data transmission solution described above, an embodiment of this application provides a data transmission method. It may be understood that the method is another expression manner of the data transmission solution described above, and the method and the data transmission solution are combined. For some or all content in the method, refer to the foregoing descriptions of the data transmission solution.

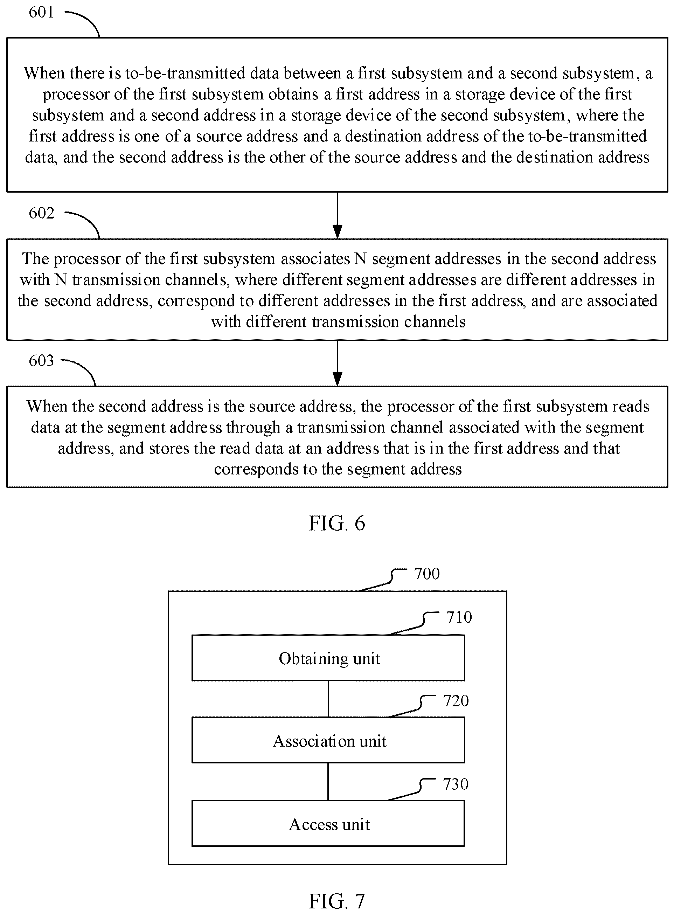

The method may be applied to a first subsystem in a computing system. The computing system further includes a second subsystem. There are N transmission channels between the first subsystem and the second subsystem, N is an integer greater than 1, and each subsystem includes a processor and a storage device. As shown in FIG. 6, the method includes the following steps.

Step 601: When there is to-be-transmitted data between the first subsystem and the second subsystem, a processor of the first subsystem obtains a first address in the storage device of the first subsystem and a second address in the storage device of the second subsystem, where the first address is one of a source address or a destination address of the to-be-transmitted data, and the second address is the other of the source address or the destination address. For details, refer to the foregoing descriptions of step 301 and step 302 in FIG. 3. Details are not described herein again.

Step 602: The processor of the first subsystem associates N segment addresses in the second address with N transmission channels, where different segment addresses are different addresses in the second address, correspond to different addresses in the first address, and are associated with different transmission channels. For details, refer to the foregoing description of step 303 in FIG. 3. Details are not described herein again.

Step 603: When the second address is the source address, the processor of the first subsystem reads data at the segment address through the transmission channel associated with the segment address, and stores the read data at an address that is in the first address and that corresponds to the segment address. For details, refer to the foregoing descriptions of step 304 and step 305 in FIG. 3. Details are not described herein again.

In some embodiments, the method further includes: When the second address is the destination address, the processor of the first subsystem reads data into the segment address through the transmission channel associated with the segment address, where the written data is data at an address that is in the first address and that corresponds to the segment address. For details, refer to the foregoing descriptions of step 306 and step 307 in FIG. 3. Details are not described herein again.

In some embodiments, that the processor of the first subsystem reads the data at the segment address through the transmission channel associated with the segment address includes: The processor of the first subsystem sends a first read instruction whose destination address is the segment address to the second subsystem through the transmission channel associated with the segment address, to read the data at the segment address. For details, refer to the foregoing descriptions of step 303 and step 304 in FIG. 3. Details are not described herein again.

In some embodiments, that the processor of the first subsystem associates the N segment addresses in the second address with the N transmission channels includes: The processor of the first subsystem divides the second address into the N segment addresses based on transmission capabilities of the N transmission channels, where a length of the segment address is positively correlated with a transmission capability of the transmission channel associated with the segment address. For details, refer to the foregoing description of step 303 in FIG. 3. Details are not described herein again.

In some embodiments, the first subsystem includes a first transmission engine and a second transmission engine. That the processor of the first subsystem reads data at the segment address through the transmission channel associated with the segment address includes: When a load of the first transmission engine is less than a load of the second transmission engine, the processor of the first subsystem reads the data at the segment address by using the first transmission engine and the transmission channel associated with the segment address. For details, refer to the foregoing description of step 304 in FIG. 3. Details are not described herein again.

In some embodiments, the first subsystem includes k transmission engines, where k is an integer greater than 1; and the method further includes: dividing, by the processor of the first subsystem, the second address into k segment addresses, where the k segment addresses are in a one-to-one correspondence with the k transmission engines; that the processor of the first subsystem reads the data at the segment address through the transmission channel associated with the segment address includes: When there is an intersection between a first segment address in the k segment addresses and a second segment address in the N segment addresses, reading, by the processor of the first subsystem, the data in the intersection by using the transmission engine corresponding to the first segment address through the transmission channel associated with the second segment address. For details, refer to the foregoing description of step 304 in FIG. 3. Details are not described herein again.

In the data transmission method provided in this embodiment of this application, different addresses in the storage space in which the to-be-transmitted data is located or the addresses in the storage space into which the to-be-written data is to be written are associated with different transmission channels, and data at corresponding addresses is simultaneously transmitted by using different transmission channels, thereby implementing multi-channel concurrent transmission and improving data transmission efficiency. In addition, in this solution, the read instruction or the write instruction is directly sent to the storage device, and the storage device performs a data read operation or a write operation during data transmission, without performing packet segmentation and packet assembly processing on the data, thereby reducing a data transmission delay and power consumption.

Refer to FIG. 7. An embodiment of this application further provides a data transmission apparatus 700. The apparatus 700 may be configured in a first subsystem in a computing system. The computing system further includes a second subsystem. There are N transmission channels between the first subsystem and the second subsystem, where N is an integer greater than 1. Each subsystem includes a processor and a storage device. The apparatus 700 includes:
an obtaining unit 710, configured to: when there is to-be-transmitted data between the first subsystem and the second subsystem, obtain a first address in the storage device of the first subsystem and a second address in the storage device of the second subsystem, where the first address is one of a source address or a destination address of the to-be-transmitted data, and the second address is the other of the source address or the destination address;
an association unit 720, configured to associate N segment addresses in the second address with the N transmission channels, where different segment addresses are different addresses in the second address, correspond to different addresses in the first address, and are associated with different transmission channels; and
an access unit 730, configured to: when the second address is the source address, read data at the segment address through a transmission channel associated with the segment address, and store the read data at an address that is in the first address and that corresponds to the segment address.

For functions of the functional units of the apparatus 700, refer to the foregoing description of the method embodiment shown in FIG. 6 or the operations performed by the processor 121 in FIG. 3. Details are not described herein again.

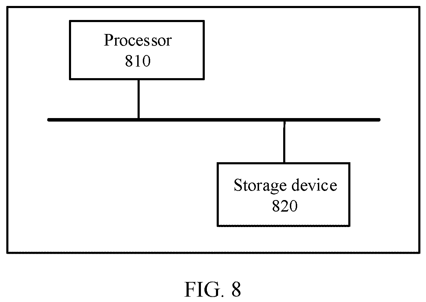

An embodiment of this application provides a chip 800. As shown in FIG. 8, the chip 800 includes a processor 810 and a storage device 820. The storage device 820 is configured to store computer instructions. The processor 810 executes the computer instructions stored in the storage device 820, to implement the method shown in FIG. 6 or the operations performed by the processor 121 in the embodiment shown in FIG. 3.

An embodiment of this application further provides a computer storage medium, including a computer software instruction, where the computer software instruction includes a program used to implement the method shown in FIG. 6. The computer-readable storage medium may be any usable medium that can store data, or a data storage device that includes one or more usable media. The usable medium may be a magnetic medium (for example, a floppy disk, a hard disk drive, or a magnetic tape), an optical medium (for example, a DVD), a semiconductor medium (for example, a solid-state drive), or the like.

An embodiment of this application further provides a computer program product, including a program used to implement the method shown in FIG. 6. The computer program product is a software or program product that can run on a processor or that is stored in any available medium.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A computing system, comprising: a first subsystem and a second subsystem, wherein there are N transmission channels between the first subsystem and the second subsystem, N is an integer greater than 1, and each subsystem comprises a processor and a storage device;
when there is to-be-transmitted data between the first subsystem and the second subsystem, the processor of the first subsystem is configured to obtain a first address in the storage device of the first subsystem and a second address in a storage device of the second subsystem, wherein the first address is one of a source address or a destination address of the to-be-transmitted data, and the second address is the other of the source address or the destination address;
the processor of the first subsystem is configured to associate N segment addresses in the second address with the N transmission channels, wherein different segment addresses are different addresses in the second address, correspond to different addresses in the first address, and are associated with different transmission channels; and
when the second address is the source address, the processor of the first subsystem is configured to: read data at the segment address through the transmission channel associated with the segment address, and store the read data at an address that is in the first address and that corresponds to the segment address.

2. The computing system according to claim 1, wherein when the second address is the destination address, the processor of the first subsystem is configured to write data into the segment address through the transmission channel associated with the segment address, wherein the written data is data at an address that is in the first address and that corresponds to the segment address.

3. The computing system according to claim 1 or 2, wherein when the second address is the source address, the processor of the first subsystem is configured to send, to the second subsystem through the transmission channel associated with the segment address, a first read instruction whose destination address is the segment address, to read the data at the segment address.

4. The computing system according to claim 3, wherein the first subsystem comprises a bus and a port of the transmission channel, and the port of the transmission channel and the processor of the first subsystem are connected to the bus;
the processor of the first subsystem is configured to send, through the bus, a second read instruction whose destination address is a port address of a transmission channel associated with the segment address, so that the second read instruction can be sent to a port of the transmission channel associated with the segment address;
the port of the transmission channel associated with the segment address is configured to translate the port address in the second read instruction into the segment address, to obtain the first read instruction; and
the port of the transmission channel associated with the segment address is configured to send the first read instruction to the second subsystem.

5. The computing system according to any one of claims 1 to 4, wherein the processor of the first subsystem is configured to divide the second address into the N segment addresses based on transmission capabilities of the N transmission channels, wherein a length of the segment address is positively correlated with a transmission capability of the transmission channel associated with the segment address.

6. The computing system according to claim 5, wherein the transmission capability comprises an available bandwidth and/or quality of service QoS.

7. The computing system according to any one of claims 1 to 6, wherein the first subsystem comprises a first transmission engine and a second transmission engine, and when a load of the first transmission engine is less than a load of the second transmission engine, the processor of the first subsystem is configured to read the data at the segment address by using the first transmission engine through the transmission channel associated with the segment address.

8. The computing system according to any one of claims 1 to 6, wherein the first subsystem comprises k transmission engines, wherein k is an integer greater than 1; the processor of the first subsystem is configured to divide the second address into k segment addresses, wherein the k segment addresses are in a one-to-one correspondence with the k transmission engines; and
when there is an intersection between a first segment address in the k segment addresses and a second segment address in the N segment addresses, the processor of the first subsystem is configured to read data in the intersection by using a transmission engine corresponding to the first segment address through a transmission channel associated with the second segment address.

9. The computing system according to any one of claims 1 to 8, wherein the processor of the first subsystem is any one of a central processing unit CPU, a graphics processing unit GPU, a neural network processing unit NPU, or a field programmable gate array FPGA, and the processor of the second subsystem is any one of a CPU, a GPU, an NPU, or an FPGA.

10. A data transmission method, applied to a first subsystem in a computing system, wherein the computing system further comprises a second subsystem, there are N transmission channels between the first subsystem and the second subsystem, N is an integer greater than 1, and each subsystem comprises a processor and a storage device; and the method comprises:
when there is to-be-transmitted data between the first subsystem and the second subsystem, obtaining, by the processor of the first subsystem, a first address in the storage device of the first subsystem and a second address in the storage device of the second subsystem, wherein the first address is one of a source address or a destination address of the to-be-transmitted data, and the second address is the other of the source address or the destination address;
associating, by the processor of the first subsystem, N segment addresses in the second address with the N transmission channels, wherein different segment addresses are different addresses in the second address, correspond to different addresses in the first address, and are associated with different transmission channels;
when the second address is the source address, reading, by the processor of the first subsystem, data at the segment address through a transmission channel associated with the segment address, and storing the read data at an address that is in the first address and that corresponds to the segment address.

11. The method according to claim 10, wherein the method further comprises:
when the second address is the destination address, writing, by the processor of the first subsystem, data into the segment address through the transmission channel associated with the segment address, wherein the written data is data at an address that is in the first address and that corresponds to the segment address.

12. The method according to claim 10 or 11, wherein reading, by the processor of the first subsystem, the data at the segment address through the transmission channel associated with the segment address comprises:
sending, by the processor of the first subsystem, a first read instruction whose destination address is the segment address to the second subsystem through the transmission channel associated with the segment address, to read the data at the segment address.

13. The method according to any one of claims 10 to 12, wherein associating, by the processor of the first subsystem, the N segment addresses in the second address with the N transmission channels comprises:
dividing, by the processor of the first subsystem, the second address into the N segment addresses based on transmission capabilities of the N transmission channels, wherein a length of the segment address is positively correlated with a transmission capability of the transmission channel associated with the segment address.

14. The method according to any one of claims 10 to 13, wherein the first subsystem comprises a first transmission engine and a second transmission engine, and reading, by the processor of the first subsystem, the data at the segment address through the transmission channel associated with the segment address comprises:
when a load of the first transmission engine is less than a load of the second transmission engine, reading, by the processor of the first subsystem, the data at the segment address by using the first transmission engine through the transmission channel associated with the segment address.

15. The method according to any one of claims 10 to 14, wherein the first subsystem comprises k transmission engines, wherein k is an integer greater than 1;
the method further comprises: dividing, by the processor of the first subsystem, the second address into k segment addresses, wherein the k segment addresses are in a one-to-one correspondence with the k transmission engines; and
reading, by the processor of the first subsystem, the data at the segment address through the transmission channel associated with the segment address comprises:
when there is an intersection between a first segment address in the k segment addresses and a second segment address in the N segment addresses, reading, by the processor of the first subsystem, data in the intersection by using a transmission engine corresponding to the first segment address through a transmission channel associated with the second segment address.

16. A data transmission apparatus, configured in a first subsystem in a computing system, wherein the computing system further comprises a second subsystem, there are N transmission channels between the first subsystem and the second subsystem, N is an integer greater than 1, and each subsystem comprises a processor and a storage device; and the apparatus comprises:
an obtaining unit, configured to: when there is to-be-transmitted data between the first subsystem and the second subsystem, obtain a first address in the storage device of the first subsystem and a second address in the storage device of the second subsystem, wherein the first address is one of a source address or a destination address of the to-be-transmitted data, and the second address is the other of the source address or the destination address;
an association unit, configured to associate N segment addresses in the second address with the N transmission channels, wherein different segment addresses are different addresses in the second address, correspond to different addresses in the first address, and are associated with different transmission channels; and
an access unit, configured to: when the second address is the source address, read data at the segment address through a transmission channel associated with the segment address, and store the read data at an address that is in the first address and that corresponds to the segment address.

17. A chip, comprising the processor and the storage device configured to perform any one of claims 10 to 15.

18. A computer storage medium, comprising a computer software instruction, wherein the computer software instruction comprises a program used to implement the method according to any one of claims 10 to 15.

19. A computer program product, comprising a program for implementing the method according to any one of claims 10 to 15.
